(19) Europäisches Patentamt
European Patent Office
Office européen des brevets

(11) **EP 4 764 841 A1**

(12) **EUROPEAN PATENT APPLICATION**

(43) Date of publication:
**24.06.2026 Bulletin 2026/26**

(21) Application number: **24222333.7**

(22) Date of filing: **20.12.2024**

(51) International Patent Classification (IPC):
**G06F 9/30** $^{(2018.01)}$ **G06F 9/38** $^{(2018.01)}$

(52) Cooperative Patent Classification (CPC):
**G06F 9/30123; G06F 9/30014; G06F 9/3013;
G06F 9/30141; G06F 9/3838; G06F 9/3851;
G06F 9/3888**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Imec VZW
3001 Leuven (BE)**

(72) Inventors:
• **LENORMAND, Erwan
4000 Liège (BE)**
• **HABER, Tom
3560 Lummen (BE)**
• **PERUMKUNNIL, Manu Komalan
3000 Leuven (BE)**
• **MEJDRICH, Eric
3001 Heverlee (BE)**

(74) Representative: **Winger
Mouterij 16 bus 101
3190 Boortmeerbeek (BE)**

(54) **A UNIFIED HIERARCHICAL 3D INTEGRATED REGISTER FILE FOR SIMT COMPUTE CORES**

(57) A hierarchically organized register file (RF) for use in SIMT processor core is disclosed. A global I/O block of the RF comprises comprising a plurality of input-output circuits for servicing wave-related RF requests. Each input-output circuit is responsive to a respective thread lane of the SIMT core. Each memory bank of the RF is divided into parallelly accessible sub-banks. Per-bank local I/O circuitry is configured to buffer the requests forwarded by the corresponding input-output circuit, schedule and dispatch the buffered requests to a selected sub-bank. The RF is unified with respect to different threads and with respect to different data types. Each request to access the register file includes a register address, and the local I/O circuitry is configured to select one of the associated sub-banks based on wave index information included in the register address. The RF is implemented on a separate memory die for vertical integration with a core die comprising the thread lanes.

FIG. 9

**Description**

**Field of the invention**

The present invention relates to the field of register files in computer processor architectures, and more specifically to hierarchically organized, unified register files for SIMT processor cores.

**Background of the invention**

Single instruction, multiple threads (SIMT) stands for an execution model in which multiple threads execute the same instruction stream in lockstep. A thread can be understood as a continuous stream of instructions that are to be executed on a corresponding stream of data. The SIMT execution model, widely implemented in today's graphical processing units (GPUs), leverages thread-level parallelism to offer the advantage of efficient parallel processing of data.
A processor core of the SIMT type provides hardware support for the simultaneous execution of multiple thread, hence is well-adapted to handle highly parallel, data-intensive workloads. The threads receive the same instruction stream and execute in lockstep. In a SIMT core, a thread ID uniquely identifies the different threads, thereby allowing it to process distinct data while executing identical instructions. Moreover, threads are frequently gathered into a thread group (also called waves or warps) during the scheduling, dispatch and execution phases of the processor core.
The high degree of thread parallelism offered by SIMT processor cores enables fast switching to other eligible warps whenever a previous warp stalls, thus saturating the functional units of the backend and sustaining high overall throughput as much as possible. Memory access latencies for cache misses as well as register dependency latencies between subsequent instructions of a warp are effectively hidden that way. Typically, SIMT processor cores hide latencies well if they operate in a throughput-bound mode rather than in a latency-bound mode. Yet, memory bandwidth limitations can lead to under-utilization of the functional units.
In contrast to vector processors which implement the single instruction, multiple data execution model, SIMT cores operate on multiple threads in parallel and allow the execution paths of different threads within a thread group to diverge and reconverge at a later moment in time. This way, the instruction stream of a thread group can be fractured when executing branches of a computer code, e.g. an if-else statement. In a SIMT core, individual threads of a thread group can be masked as active or inactive, which affects their execution behavior. The instructions are allowed to run for all active threads, whereas inactive threads are blocked from executing these instructions. Furthermore, the data layout in vector processors and SIMT cores is different. While vector processors operate on data vectors as fundamental inputs, i.e. data elements/operands packed into vectors of a maximum length, there is no such restriction present in SIMT processor cores in which the different threads are allowed to access memory independently. The coalescing of several thread accesses to global memory into more coarse-grained transactions may reduce the memory-related data traffic for SIMT processor cores but diverging, not fully-coalesced memory accesses (i.e., not lined up and/or not aligned with transaction boundaries) still cause a significant decrease in warp throughput.
Peak throughput conditions for SIMT processor cores are attainable only if the SIMT processor core can reach a corresponding minimum warp occupancy level, which usually depends on the frequency of arithmetic operations, memory operation, etc. within the program kernel that is running on the SIMT processor core. Here, the warp occupancy level refers to the number of warps that are concurrently executed by the SIMT processor core, knowing that only a small subset of those warps is allowed to issue an instruction during each issue cycle. Indeed, some of the warps may be stalled and resumed later, or awaiting scheduling of their next instruction.
The execution efficiency of compute-intensive applications such as scientific computing, data analytics, and machine learning applications, largely depends on the ability to maximize the throughput of arithmetic operations within the SIMT processor core architectures. To sustain the high-throughput operation and avoid that data related to the constantly switching threads is repeatedly transferred to global or local memory, i.e. the spilling of register contents to local or global memory if the code exceeds the register limit, register files with a large capacity for thread-private register allocation are essential to SIMT processor cores. Register spilling is undesirable as the perpetual data transfer of register contents to and from memory is highly energy inefficient, increases the instruction count and stress on the memory system, and introduces cache pollution. Executing load and store instructions too frequently occupies processor cycles that could otherwise be used by arithmetic logic units (ALUs) or floating-point units (FPUs), leading to an underutilization of these critical execution units. Moreover, the warp throughput of the SIMT processor core often decreases significantly if memory bandwidth limitations are encountered. And cache pollution not only causes more data movement across the memory hierarchy but also increases the average latency of the warps, requiring even higher warp occupancy levels.
Yet, register files are expensive to implement and suffer from bandwidth limitations for increasing storage capacities and/or register file port counts, which are mainly due to the increase in wire capacitance and propagation delay for increasing wire lengths and counts. Often, the register file resources are duplicated in a SIMT processor core to provide sufficient storage capacity and satisfy the bandwidth requirements. For instance, it is common practice to provide separate smaller-sized register files for different data types such as float and integer, which can be accessed faster than a single, larger-sized register file. The disadvantages of this duplication of register file resources are the concomitant increases in chip area, cost, design and verification complexity, and power dissipation.

Patent document US 10853904 B2 (Eckert [US] et al.), December 1, 2020, discloses a processor that includes a hierarchical register file for a graphics processing unit (GPU). The hierarchical register file has a top level, which is stored at a local memory on the same integrated circuit die as the GPU, and lower levels that are stored at a different, remote memory located on a different die than the GPU. An active, predicted-active, or inactive status of in-flight wavefronts at the GPU are monitored by a register file control module to place execution data for active and predicted-active wavefronts in the top level and place execution data for inactive wavefronts at lower levels of the hierarchical register file. A disadvantage of the hierarchical register file is that arithmetic-limited code may frequently switch between active and inactive waves, so that waves remain inactive only over short time periods. This causes significant data movement across the different hierarchical levels of memory, which may by itself become a throughput-limiting factor, especially if register bandwidth is scarce. Moreover, wrong predictions or a bad timing for the predicted active waves puts additional stress on the hierarchical register file, which can cause further drops in the attainable throughput. Eventually, memory-bound applications will cause many waves to transfer the execution data to the lower levels, which poorly exploits the faster accessible top level, and access to or the prefetching of thread data may not be possible during the transfer to the lower levels of the hierarchical register file.

Accordingly, there is a continuing need for improved register file architectures and related access methods for SIMT processor cores that allow for high-throughput arithmetic operations by minimizing data movements to global memory and optimizing the utilization of functional units within the processor core backend.

## Summary of the invention

It is an object of embodiments of the present invention to enable high-throughput arithmetic operations on SIMT processor cores by reducing the need for data movements between the register file of the SIMT processor core and global memory.

This objective is accomplished by a register file for SIMT processor cores and related execution methods in accordance with the claims.

In one aspect, the present invention relates to a hierarchically organized register file for use in a processor core of the SIMT type having a plurality of thread lanes and capable of issuing multiple waves (groups of threads to be executed concurrently on the plurality of thread lanes) simultaneously. The register file is implemented on a separate memory die for vertical integration with a core die comprising the processor core thread lanes. The register file comprises: a global I/O block having a plurality of input-output circuits, a plurality of memory banks associated with the plurality of thread lanes, and local I/O circuitry for each memory bank. The global I/O block is configured to receive and service wave-related access requests to the register file. A separate memory bank or bank group is allocated to each input-output circuit of the global I/O block and each input-output circuit of the global I/O block is responsive to a respective one of the thread lanes of the processor core. Each memory bank is divided into multiple, parallelly accessible sub-banks. The local I/O circuitry associated with each memory bank is configured to schedule the buffered requests that have been forwarded by the corresponding input-output circuit of the global I/O block and dispatch the scheduled requests to a selected one of the sub-banks. Each access request to the register file includes a register address (e.g., the address data) and the local I/O circuitry is configured to select one of the associated sub-banks based on wave index information included in the register address. The register file is unified with respect to different threads and with respect to different data types pertaining to each thread: a distinct address space is associated with each memory bank or bank group of the register file and logically partitioned into segments and sub-segments, so that the segments are allocatable to the threads of different waves and the sub-segments within each segment are allocatable to the different data types related to each thread. The logical partitioning of the address spaces associated with the different memory banks or bank groups of the register file is uniform.

It is an advantage of embodiments of the present invention that the hierarchical, multi-banked register file architecture fully exploits thread-level and wave-level parallelism in SIMT core architectures, thus improving utilization and computational efficiency.

In preferred embodiments, the local I/O circuitry for each memory bank may comprise individual local I/O sub-circuits with respect to each sub-bank of that memory bank. Providing a separate local I/O sub-circuit for each sub-bank improves parallelism and throughput.

In embodiments in which the sub-banks of each memory bank are sub-divided into multiple parallelly accessible sub-arrays, the sub-arrays associated with each sub-bank may share the same local I/O sub-circuit, and each local I/O circuitry may be configured to forward the pending register file access requests to the associated memory sub-arrays based on the register address.

In other embodiments, the local I/O circuitry associated with each memory bank may be shared by the sub-banks of that memory bank. In embodiments, the local I/O circuitry or, if present, a respective one of the local I/O sub-circuits may be configured to buffer access requests that have been forwarded by the corresponding input-output circuit of the global I/O block. In alternative embodiments, the local I/O circuitry or, if present, a respective one of the local I/O sub-circuits may be configured to retrieve buffered access requests that have been forwarded by the corresponding input-output circuit of the global I/O block from a local request buffer, the local request buffer being associated with one of the sub-bank handled by the local I/O circuitry or sub-circuit.

In embodiments, the sub-banks of each memory bank of the register file may be sub-divided into multiple, parallelly accessible sub-arrays, wherein the local I/O circuitry or, if present, a respective one of the local I/O sub-circuits is configured to select one of the sub-arrays associated with each sub-bank based on sub-array index information included in the register address. The local I/O circuitry or, if present, a respective one of the local I/O sub-circuits is further configured to dispatch the scheduled requests to a selected one of the sub-arrays This further organization of the hierarchical register file into sub-arrays ensures lower wait times and improves wave pipelining.

In embodiments, routing circuitry located between the global I/O circuitry and the local I/O circuitry may be configured to select one of the associated sub-banks based on a field of the register address. It is an advantage of embodiments that the field used for sub-bank selection and request routing can be derived from the wave index.

In embodiments, wave-related requests to the register file that pertain to multi-operand instructions may address at least two different sub-arrays.

In embodiments, the local I/O circuitry associated with each memory bank may be configured to arbitrate between conflicting requests to concurrently access the same sub-bank.

In embodiments, the local I/O sub-circuits for each memory sub-bank may be configured to arbitrate between conflicting requests to concurrently access the same sub-array associated with that sub-bank.

In embodiments, the local I/O circuitry or local I/O sub-circuit associated with each memory sub-bank may comprise multiplexing circuitry to select one of the sub-arrays, based on sub-array index information included in the register address.

In embodiments, the sub-banks of each memory bank may be multi-ported memory arrays, for instance including at least three independent read ports and at least two independent write ports per sub-bank.

In embodiments, the sub-arrays associated with each memory sub-bank having sub-arrays may be multi-ported sub-arrays, for instance including at least two independent read ports and at least one independent write port per sub-array. Accessing the multi-ported sub-arrays in parallel has the advantage that the port count for the corresponding sub-bank is further increased.

In embodiments, the register file may comprise an interconnect configured to route request and response signals between each input-output circuit of the global I/O block and the local I/O circuitry of the corresponding memory bank or bank group.

In embodiments, the global I/O block may provide an interface for register file access requests from a dispatch unit of the SIMT processor core.

In embodiments, each input-output circuit of the global I/O block may comprise data buffers configured to gather read operands pertaining to the same wave-related request from the different memory banks or bank groups, and hold write operands pertaining to the same wave-related request to be stored in the different memory banks or bank groups. This allows coalesced fetching of operands relating to the same wave.

In embodiments, each local I/O circuitry may comprise synchronization circuitry for accessing register contents in the associated sub-banks with uniform latency, and/or synchronize different clock domains associated with the operation of the global I/O block and the local I/O circuitry.

In embodiments, the register file memory may be implemented as SRAM banks, which is beneficial for integration density of memory cells compared to standard flip-flops.

In another aspect, the present invention relates to a processor core of the SIMT type having a plurality of thread lanes and capable of issuing multiple waves during each instruction issue cycle of the processor core. The processor core comprises the register file according to embodiments of the previous aspect, wherein the memory die containing the register file is vertically integrated with the core die comprising the processor core thread lanes.

It is an advantage of embodiments of the invention that the SIMT processor core is implemented on two vertically stacked dies: a memory die and a core logic die. The resulting 3D structure is a very compact one and allows for direct routing with shorter interconnections and wire-related latencies between the register resources located on the memory die and the thread execution hardware located on the core die. Moreover, owing to the 3D-integrated structure, a larger area on the memory die is available for storage, which allows for a larger number of registers. The related gain in memory capacity gains of the 3D structure compared to conventional 2D implementations of the SIMT processor core and register file may be a factor four to eight, or even larger.

It is an advantage of embodiments of the present invention that core pipeline hazards can be addressed by performing wave-level parallelism, enabling simultaneous execution of instructions from different or same waves and thereby improving resource utilization.

In embodiments, the processor core may further comprise a wave table, an instruction decoder and an instruction buffer. The wave table is configured to hold a set of wave entries, each wave entry comprising a wave index, a program counter pointing to an instruction to be executed in lockstep by the plurality of thread lanes, a bit mask specifying a group of active threads within the wave, and a base address for each data type related to the wave. The instruction decoder is configured to decode instructions pointed to by the program counters of wave table entries that are ready for execution. The instruction decoder is configured to determine the register address of each operand involved in said instruction, based on the base address of the operand's data type and a register number identifying the operand, while decoding instructions. The instruction buffer is configured to hold decoded instructions pointed to by the program counters of wave table entries that are ready for execution. Entries in the instruction buffer specify the register address of each operand involved in the decoded instruction.

In embodiments, the processor core may further comprise a control unit configured to dynamically set the base addresses in the wave table in response to a dynamical repartition of the address spaces associated with the memory banks or bank groups of the register file, such as produced by a compiler. This allows dynamically remapping the register file.

In embodiments, the register file may be configured to use, generate or receive a faster clock signal compared to the clock signal of the SIMT core itself. This is beneficial for reducing the number of wires between the global I/O block and the local I/O circuitry, and to increase throughput.

In embodiments, the processor core may be implemented according to a reduced instruction set computer (RISC) architecture, which is well suited for SIMT processing.

It is an advantage of embodiments of the invention that the SIMT processor core is compatible with and supports commonly used instruction set architectures such as RISC-V.

In embodiments, the SIMT processor core may be configured to process instructions in accordance with an instruction pipeline, the instruction pipeline comprising at least the following stages: an instruction fetch stage, an instruction decode stage, an instruction dispatch stage, an execution stage and a writeback stage.

It is an advantage of embodiments of the present invention that data movement between the register file and memory is reduced, leading to lower energy consumption and improved energy efficiency. It is an advantage of embodiments of the present invention that cache pollution caused by spilling registers to memory is minimized, enhancing overall system performance.

It is an advantage of embodiments of the present invention that increased register file resources allow more data to be stored close to the execution units, improving performance by reducing latency.

It is an advantage of embodiments of the present invention that a unified register file architecture supports both floating-point and integer units, simplifying the design and improving resource utilization.

It is an advantage of embodiments of the present invention that multiport support enables instructions that read multiple source registers and write to multiple destination registers, supporting complex operations.

It is an advantage of embodiments of the invention that the throughput of the SIMT processor core, in particular the arithmetic throughput; can be increased.

It is an advantage of embodiments of the invention that register file pressure can be decreased for the SIMT processor core.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, in which:

FIG. 1 is a block diagram of a hierarchically organized register file for use in a processor core of the SIMT type, in accordance with embodiments of the invention.
FIG. 2 is a block diagram of the hierarchically organized register file according to an alternative embodiment of the invention.

FIG. 3 is a detailed view of a memory bank in the hierarchically organized register file in accordance with embodiments of the invention.

FIG. 4 illustrates a logical partitioning for register files according to embodiments of the invention.

FIG. 5 illustrates an alternative partitioning for register files according to embodiments of the invention.

FIG. 6 explains the relationship between register file access requests and information stored the instruction buffer of the SIMT core, which can be used in embodiments of the invention.

FIG. 7 is a block diagram of a SIMT processor core that comprises a register file in accordance with embodiments of the invention.

FIG. 8 is a cross-sectional view of the SIMT core of FIG. 7.

FIG. 9 and FIG. 10 show alternatives of the register files embodiments of FIG. 1 and FIG. 2, respectively.

The drawings are only schematic and are non-limiting. Any reference signs in the claims shall not be construed as limiting the scope. In the different drawings, the same reference signs refer to the same or analogous elements.

## Detailed description of illustrative embodiments

The present invention will be described with respect to particular embodiments and with reference to certain drawings but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

As used herein, and unless otherwise specified, the term "processor core of the SIMT type" refers to a processor core that operates according to the Single Instruction Multiple Threads (SIMT) architecture, wherein multiple threads execute the same instruction simultaneously but on different data elements. This allows for parallel processing of data across multiple thread execution lanes. Examples include graphics processing units (GPUs) designed for parallel execution of the same instruction stream across multiple data threads.

As used herein, and unless otherwise specified, the term "lane" refers to a thread execution lane within the processor core that is capable of executing instructions independently in a thread-parallel manner. Each lane includes its own set of execution units and a portion of the register file space that is private to the threads running on the lane, thereby enabling it to process data specific to its assigned thread. For example, in a processor core with multiple lanes, each lane operates on separate data elements concurrently while executing the same instruction sequence.

As used herein, the term "thread-parallel execution" refers to the concurrent execution of the same instruction by multiple thread execution lanes, where each lane operates on its own set of data. This execution model allows for parallelism at the thread level, improving performance for data-parallel tasks. For example, processing elements of an array or sparse matrix in parallel, with each thread handling a different element simultaneously.

As used herein, the phrase "active ones of the plurality of lanes" or "active lanes" refers to the subset of thread execution lanes that are currently enabled and participating in the execution of instructions. Lanes may be inactive due to control flow decisions such as branching or masking operations. For example, in conditional execution, only lanes processing data that meet certain criteria remain active while others are deactivated.

As used herein, the term "execution pipeline" refers to a series of stages through which instructions pass during processing in the processor core, allowing for overlapping of instruction execution to improve throughput. The stages may include fetching, decoding, executing, and writeback phases. For example, while one instruction is being executed, another can be decoded, and a third fetched from memory.

As used herein, the phrase "colliding access requests" refers to register file access requests from different wave threads that target the same register file sub-bank or sub-array with the same sub-bank and cannot be served simultaneously due to the limitations in the number of accessible ports of that sub-bank or sub-array, as the case may be. Such collisions require detection and resolution to prevent access conflicts. For example, two wave threads attempting to write to the same sub-bank with only one write port in the same clock cycle would result in a collision.

As used herein, the phrase "fixed uniform access delay" refers to a consistent and equal number of register file clock cycles required to complete any bank or sub-bank access in the register file, regardless of the specific memory bank or sub-bank accessed or the operation performed. This ensures predictable memory operation timing and simplifies pipeline design by preventing variable latency.

In one aspect the present invention relates to a hierarchically organized register file for integration with SIMT core architectures. The register file is implemented on a separate memory die for vertical integration with a core die comprising the processor core thread lanes.

An exemplary register file bank may comprise:

- a plurality of banks or bank groups associated with and connectible to a corresponding plurality of SIMT core thread lanes,
- a pair of global I/O buffers (one for read requests, called read buffers, and one for write requests, called write buffers), replicated as many times as the number of concurrently issued instructions per core clock cycle supported by the SIMT core with which the register file is intended to cooperate,
- global I/O circuitry configured to interconnect each register file bank or bank group with the corresponding thread lane,
- a global I/O controller configured for synchronizing and controlling the global I/O circuitry, buffers and associated arbitration,
- sub-banks within each bank of the register file,
- an internal bus to interconnect the sub-banks and the global I/O buffers.

The global read buffers are generally wide enough to hold every operand that must be fetched to execute an instruction (i.e., a single entry is used per instruction). The global write buffers are wide enough to hold every operand that must be updated following the execution of an instruction (i.e., one entry per instruction). The depth of each buffer depends on the level of pipelining needed to reach the targeted throughput and core clock frequency.

The internal bus may be full duplex, meaning that dedicated wires are instantiated for transmitting the requests and other wires are dedicated to forwarding the responses. There is a path for read requests and another one for write requests. The bus can operate at a higher clock frequency than the frontend, thereby enabling one request to be routed to each sub-bank per frontend clock cycle. For instance, the SIMT core frontend operates at 2 GHz and the bus at 4 GHz. On odd cycles, requests from a first set of read and write buffers (e.g. relating to issue 0) are routed to a first one of the sub-banks (e.g. sub-bank 0), while on even cycles, requests from a second set of read and write buffers (e.g. relating to issue 1) are routed to a second one of the sub-banks (e.g. sub-bank 1). The bus arbitrator may be a multiplexer controlled by the global I/O controller.

A sub-bank of each register file bank generally provides sufficient connectivity to enable operand reads and register updates for every one instruction per frontend clock cycle (e.g., 3 read ports, 2 write ports). A typical sub-bank may comprise:

- independent local I/O buffers for each read and write port, configured to store pending requests destined for and routed to the sub-bank,
- arbitration logic blocks for the array or each sub-array of the sub-bank,
- a multi-ported memory array or sub-arrays, e.g. SRAM, configured to store the register values.

Typically, the number of ports per sub-array is less than the number of ports per sub-bank if the sub-bank comprises multiple sub-arrays. However, the aggregate number of ports of all sub-arrays is greater than the number of ports of the corresponding sub-bank. This way, enough ports for reaching high target throughput are present. Collisions of requests to the same (sub-)array of the sub-bank due to the reduced number of ports per (sub-)array are detected and resolved by the respective local arbitration logic block, e.g. based on request age.

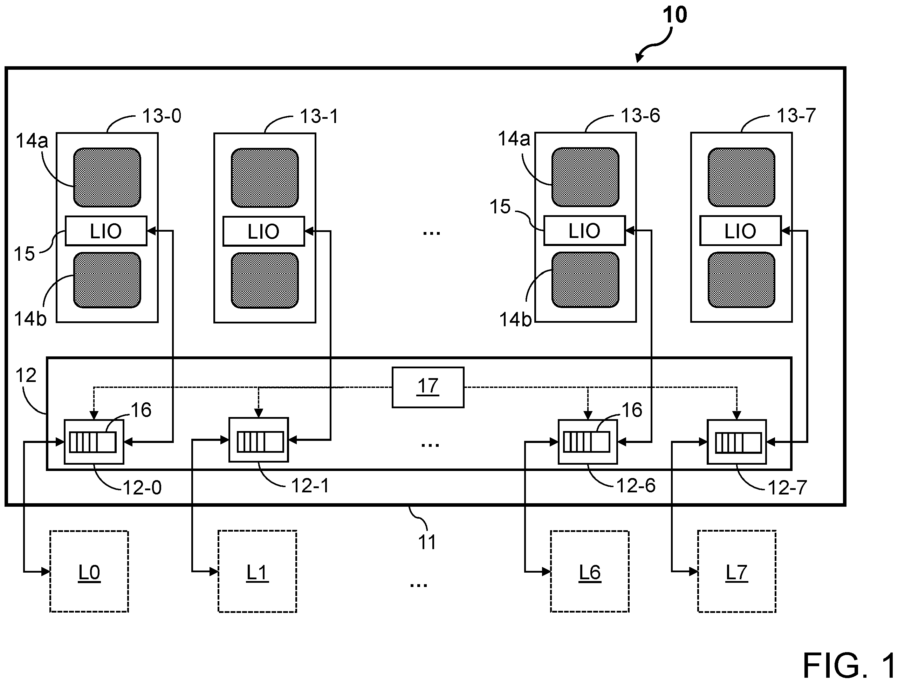

FIG. 1 is a block diagram of a register file for use in a processor core of the SIMT type. Thread lanes L0 to L7 of the SIMT core are implemented on a core die and interface the register file 10 that is implemented on a separate memory die 11. The memory die 11 is suitable for vertical integration with the core die. More specifically, thread lanes L0 to L7 of the SIMT core are interfacing the register file 10 through a corresponding plurality of thread-aligned input-output circuits 12-0 to 12-7 of a global I/O block 12. Hence, each input-output circuit designates a particular lane of the thread lanes of the SIMT core to which the input-output circuit is responsive. This means that the input-output circuit exclusively deals with operand fetch and writeback requests regarding the designated lane, whereas register file access requests originating from different thread lanes are received and serviced by the corresponding other input-output circuits of the global I/O block 12. For instance, register file accesses involving lane L0 of the SIMT core exclusively pass through input-output circuit 12-0, register file accesses involving lane L1 of the SIMT core exclusively pass through input-output circuit 12-1, and so forth. Furthermore, each input-output circuits of the global I/O block 12 is preferably provided with multiple ports for read and write access to the register file, such as Nrd read ports and Nw write ports per wave issue slot of the SIMT core, where typically Nrd $\geq$ 2 and Nw $\geq$ 1. In a dual wave-issue SIMT core, there are two wave issue slots assigned to each instruction issue cycle. The number of read and write ports per lane of the SIMT core, Nrd and Nw respectively, may be optimized for a particular instruction set architecture (ISA) such as the RISC-V ISA. This supports multi-ported access to the register file, which is beneficial for throughput. In preferred embodiments one may have Nrd $\geq$ 3 and Nw $\geq$ 2, thus providing full support to instructions that update up to two registers (e.g., load with update instructions having two destination registers) or read up to three registers (e.g., floating multiply-add instruction having three source registers).

Each instruction issued by the SIMT core addresses a set of active threads and is executed, in lockstep, by a corresponding set of active lanes of the SIMT core. Threads executing the same code but operating on different data are usually grouped into waves for concurrent scheduling and execution. Each thread can be understood as an instruction stream that represents a piece of user code that is highly-parallelizable, commonly referred to a kernel. Therefore, source and/or destination operands relating to each wave's current instruction to be issued to the set of active lanes are translated into a set of register file access requests which attempt to read and/or write operand data in the source and/or destination registers of the register file that are specified in the instruction. More specifically, each operand fetch or writeback operation specified in the instruction is translated into a separate register file access request for each active lane. The requests of the different lanes usually differ in the operand data that is referred to by the register number, even if the same register number is used by all active lanes. The individual requests of the set of register file access requests are then forwarded to the corresponding input-output circuits of the global I/O block. Hence, only those input-output circuits of the global I/O block 12 that are associated with the set of active lanes are receiving and responding to register file access requests. Together with the thread-aligned implementation of memory banks 13-0 to 13-7 of the register file, the thread-aligned input-output circuits 120-0 to 12-7 provide the necessary support for the thread-parallel operation of the SIMT processor core and allow to always exploit the thread level parallelism.

Optionally, each input-output circuit 12-0 to 12-7 of the global I/O block 12 comprises one or more request buffers 16, e.g. linear or circular FIFO buffers, configured to temporarily hold pending access requests to register file 10, which have not yet been served by the corresponding register file banks 13-0 to 13-7. Once served and the response signals returned to the corresponding thread lanes, the requests are no longer pending and can be removed from the request buffers 16, e.g. to an operand collector external to the register file. Separate buffers for read and write access requests, possibly with multiple lines each, may be implemented in each input-output circuit 12-0 to 12-7. Global control circuitry 17 within the global I/O block 12 is configured to control the operation and buffer states of the request buffers 16. Furthermore, the global control circuitry 17 may be configured to select, e.g. during each register file clock cycle, those requests among the buffered register file access requests that will be forwarded to the local I/O circuitry 15 of each memory bank 13-0 to 13-7. Various scheduling policies based on criteria such as request age, number of pending and/or in-flight requests, wave prioritization, request type (e.g., reads or writes), buffer utilization within the global I/O block, buffer utilization at the bank level, or combinations thereof may be implemented by the global control circuitry 17. Global control circuitry within the global I/O block may also be configured to handle the synchronization of the global request buffers, e.g. with respect to the forwarding of fetched operands to an operand collector on the logic die. That is, fetched operands may be held in the global request buffers as long as all the operand transactions pertaining to the same SIMT core instruction have been completed and then forwarded collectively. The buffering of register file access requests within the global I/O block may be beneficial for register file throughput, the avoidance of contention or overflow of local buffering of register file access requests at the bank level. In embodiments in which the SIMT core's frontend circuitry is aware of the logical partitioning of the register file among waves and the mapping of allocated registers to memory locations in the register file, the wave issuing may be optimized to saturate the sub-banks or sub-arrays within each sub-bank with minimal global and local request buffering.

The plurality of concurrently accessible memory banks 13-0 to 13-7 of register file 10 are associated with the plurality of input-output circuits 12-0 to 12-7. Furthermore, each memory bank 13-0 to 13-7 of the register file 10 is divided into multiple, parallelly accessible sub-banks 14a, 14b and has associated local I/O circuitry 15 that can be shared by the corresponding sub-banks 14a, 14b. In embodiments, the logic elements and wire connections internal to each local I/O circuitry preferably is replicated with respect to each sub-bank (e.g. duplicated for two sub-banks) associated with one register file memory bank to support high throughput operation (i.e., according the number of read and write ports per issue slot). Alternatively, the local I/O circuitry may be composed of individual local I/O sub-circuits such that there is one local I/O sub-circuit provided for each sub-bank. More generally, the amount of logic and buffering resources at the global I/O level and the local I/O level may be allocated according to a tradeoff between performance (throughput) and cost (area and energy consumption). Wires or routing circuitry connects the I/O circuitry that is local to each bank to the corresponding input-output circuit of the global I/O block. Hence, access requests forwarded by the input-output circuits of the global I/O block 12, located at the periphery of the memory die 11, are received at the respective local I/O circuitry 15 in proximity of the sub-banks 14a, 14b targeted by each thread lane. The organization of register file banks into multiple, parallel accessible sub-banks improves the performance of the SIMT core with respect to concurrently executed waves (instructions) and ensures an optimal use of the available wave-level parallelism. Preferably, there are at least as many sub-banks per register file bank as there are wave issue slots provided by the SIMT processor core for which the register file is designed for. This means that a register file having a number 'SB' of sub-banks per bank is intended to be used with and integrated into a SIMT processor core that supports the issuing of at most 'W' wave instructions (preferably form distinct waves, but can also be from same wave) per instruction issue cycle of the SIMT core, e.g. it is typically intended to have $SB \geq W$ in the final SIMT processor core including the register file. Here, the instruction issue cycle of the SIMT core refers to the minimum time interval that separates two consecutive instruction issue events. An instruction issue cycle may last for one or multiple core clock cycles. As explained further below, the local I/O circuitry 15 associated with each register file bank comprises a request buffer stage at the bank or sub-bank level, arbitration logic for resolving collisions between concurrent sub-bank (or sub-array within sub-bank, if applicable) access requests and control logic for sub-bank selection based on wave index information (and sub-array selection based on the register address, if applicable).

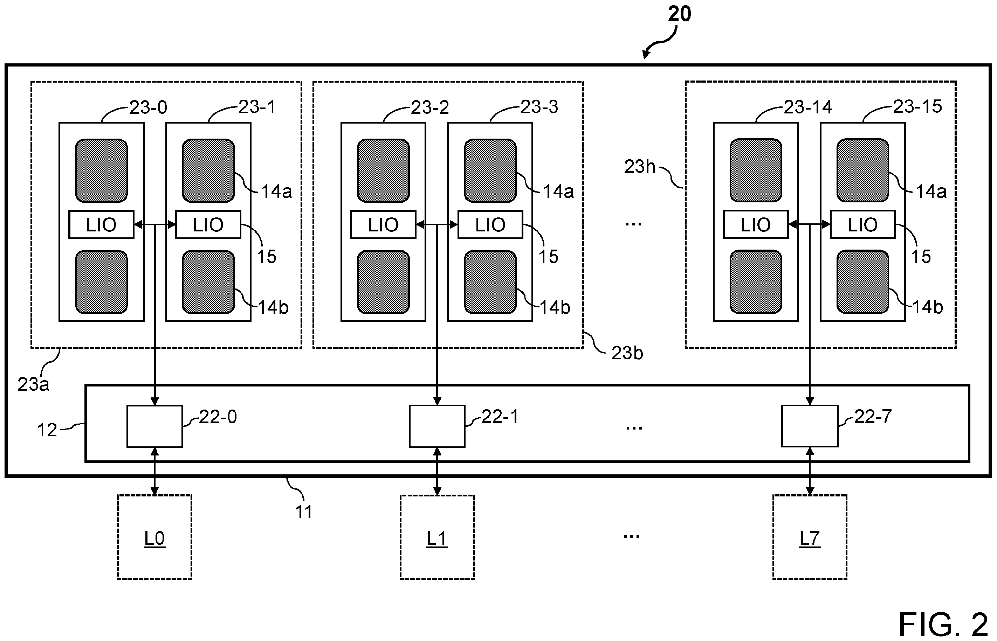

In embodiments of the invention, there are at least as many register file banks as there are lanes in the SIMT core backend circuitry for which the register file is designed for. This means that a register file having a number 'B' of banks is intended to be used with and integrated into a SIMT processor core with at most 'TL' thread execution lanes, e.g. it is typically intended to have $B \geq TL$ in the final SIMT processor core including the register file. Moreover, there is either a one-to-one correspondence between register file banks and input-output circuits of the global I/O block or a many-to-one correspondence. In the former case, one distinct memory bank of the register file is associated with each one of the input-output circuits, whereas in the latter case one bank group, i.e. a group formed by two or more memory banks of the register file, is associated with each one of the input-output circuits. Hence, individual register file banks or groups of such register file banks are thread-aligned with the thread lanes of the SIMT core in embodiments of the invention. The present example of FIG. 1 shows a register file 10 in which the individual register file banks 13-0 through 13-7 are connected to corresponding input-output circuits 12-0 through 12-7 in a one-to-one manner. For instance, memory bank 13-0 of register file 10 is exclusively communicating with input-out circuit 12-0, memory bank 13-1 of register file 10 is exclusively communicating with input-out circuit 12-1, and so forth. In contrast thereto, the embodiment of FIG. 2 shows the block diagram of a register file 20 in which the individual register file banks 23-0 through 23-7 are connected to corresponding input-output circuits 22-0 through 22-3 in a many-to-one manner. For instance, memory banks 23-0 and 23-1 of register file 20 form a first bank group 23a that is exclusively communicating with input-out circuit 22-0, memory banks 23-2 and 23-3 of register file 20 form a second bank group 23b that is exclusively communicating with input-out circuit 22-1, and so forth, up to memory banks 23-14 and 23-15 of register file 20 forming an eighth bank group 23h that is exclusively communicating with input-out circuit 22-7 . Each thread lane being associated with a distinct one of the memory banks or bank groups of the register file, the threads running on a particular lane are only allowed to access registers that have been allocated in the register file bank or bank group associated with this lane. This means that thread data, e.g. computation and memory address data relating to arithmetic operations and/or load-and-store operations to/from local or global memory to be performed by the thread, when placed into registers of the register file, is restricted to the memory region provided by the bank or bank group associated with the processor core lane on which the thread is run.

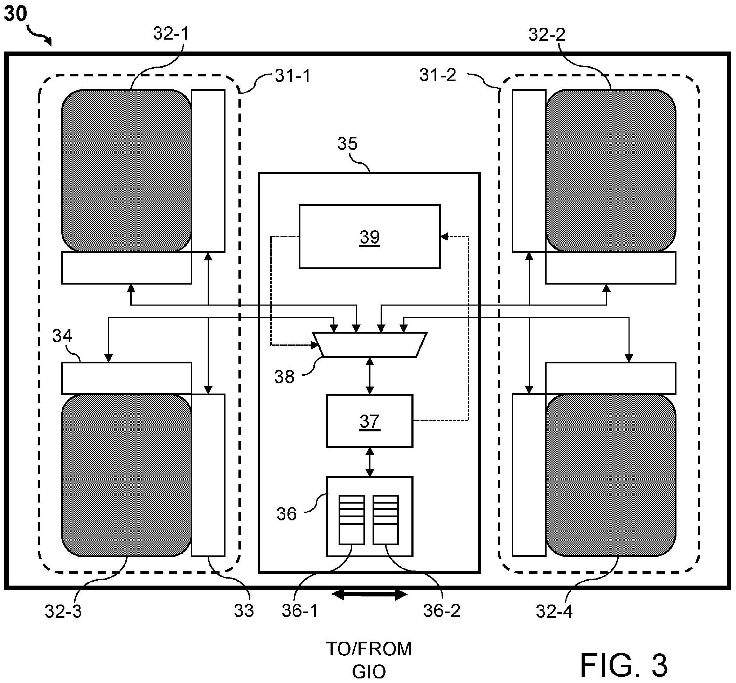

FIG. 3 is a block diagram showing details of the register file at the bank level. The register file bank 30 includes two sub-banks 31-1 and 31-2. Next to the hierarchical organization of the register file into banks and sub-banks, each sub-bank can be further subdivided into several sub-arrays. For instance, the first sub-bank 31-1 is composed of two parallelly accessible sub-arrays 32-1 and 32-3, and the second sub-bank 31-2 is composed of two parallelly accessible sub-arrays 32-2 and 32-4. The sub-array organization within individual sub-banks increases the number of parallel resources and improves the throughput and pipelining of waves within the register file. For instance, the stalling of waves can be reduced or prevented if the allocated registers accessed by the waved are distributed over multiple sub-arrays.

The local I/O circuitry 35 associated with the register file bank 30 comprises a request buffer stage 36, an arbitration unit 37, multiplexing circuitry 38 and a local control unit 39. Additionally, the local I/O block 35 may include synchronization circuitry (not shown), which ensures a uniform access latency across the sub-arrays of the register file bank. The request buffer stage 36 is configured to receive requests from the corresponding input-output circuit of the global I/O block that attempt to access the register file bank 30, e.g. one of its sub-arrays 32-1 to 32-4, and buffer the received requests until they have been successfully served by one of the sub-banks. The buffer stage 36 is configured to return response signals of serviced requests to the corresponding input-output circuit of the global I/O block and release the corresponding buffer entries. The buffer stage may provide separate buffers 36-1 and 36-2 (e.g., FIFO-like buffers) for read and write requests respectively. Each read or write buffer 36-1, 36-2 may comprise one or more lines. Typically, the depth of buffers 36-1, 36-2 of the buffer stage 36 is smaller than the request buffer depth used with the global I/O block. Arbitration unit 37 is connected between the local buffer stage 36 and the multiplexing circuitry 38 and configured to detect and resolve conflicts among concurrent requests before they are routed to the targeted sub-banks, e.g. the collision of two or more requests at the buffer heads of the buffer stage 36 that would compete for the same access port when attempting to access the same sub-bank and the same sub-array within this sub-bank at the same time. In the case of detected collisions, the arbitration unit 37 may be configured to serialize conflicting request by prioritizing and forwarding a subset of the colliding requests, e.g. prioritize and forward at least one collision-free request of the set of originally conflicting requests. A simple prioritization rule, e.g. based on request type (read or write) and/or age, may be implemented by arbitration unit 37.

Subsequent read and write accesses by the same wave instruction to the register file are usually spaced out by enough core clock cycles that are needed for execution of the instruction on the SIMT core lanes, thus unlikely to cause conflicts. Regarding the instructions of concurrently issued waves, an-indexed pairing or grouping of waves to be issued by the SIMT core frontend circuitry may help to avoid conflicts if different classes of wave indices are addressing different sub-banks of the register file bank. By way of example, pairing the instruction of a first wave having an odd wave index with the instruction of a second wave having an even wave index in a dual wave-issue SIMT core and assuming a sub-bank selection based on wave index parity, would not cause conflicts between the register file access requests pertaining to the first wave and register file access requests pertaining to the second wave. Indeed, in order to achieve good SIMT core performance and high arithmetic throughput, it is desirable not to stall or delay one of the concurrently issued wave instructions relative to the others. However, there may still be conflicts among requests of the same wave that try to access the same sub-array. Likewise, it is possible interleave subsequently issued waves such that their associated wave indices belong to different classes that are routed to corresponding different sub-banks of the register file bank. This can be directly applied to a single wave-issue SIMT core, in which instructions of waves belonging to different parity classes (e.g., odd and even wave indices) are issued in an alternating fashion. But it can also be extended to dual wave-issue and multi wave-issue SIMT cores in which a larger number of sub-banks are implemented per register file bank. By way of example, four sub-banks in each register file bank may be addressed separately and exclusively by requests that originate from four different wave index classes (e.g., determined as classes of the 'wave index modulo four' operation). In a dual wave-issue SIMT core two pairs of two concurrent waves each may then be issued one pair at a time without causing inter-wave conflicts when accessing the sub-banks of the register file.

Local control unit 39 is configured to generate a selection signal for the multiplexing circuitry 38, by extracting wave index information from the (register) address data included the register file access requests. The selection signal for each request to be routed by the multiplexing circuitry 38 is then set by the control unit 39 as a function of the extracted wave index information, whereby different classes of wave indices are routed to different sub-banks 31-1, 31-2 of the register file bank 30. For instance, wave indices having even parity are exclusively routed to the first sub-bank 31-1 and wave indices having odd parity are exclusively routed to the second sub-bank 31-2, or vice versa. A similar routing scheme based on modulo classes can be used in the presence of more than two sub-banks per register file bank (e.g., wave index mod SB determines the sub-bank to which the corresponding request is routed, where SB stands for the total number of sub-banks per register file bank). Wave index information may be encoded in a separate field of the register file access request, e.g. using the one or two least significant bits (LSBs) of a binary representation of the wave index, or may be derived from the address data included in the requests without any additional wire or buffering overhead. As registers allocated to different waves are contained in different segments of a logical partitioning of the register file memory, the base addresses associated with these different segments are also different from each other. Hence, the control unit 39 may be configured to derive the wave index information form the register address data of the request by extracting the base address (or a portion thereof) corresponding to logical segment of the register file partition that has been allocated to the wave from the address data of the wave's request. In either case, only a limited number of bits (e.g. log2[#destinations], e.g. one or two bits) of the address data may be required by the control unit 39 and supplied by the arbitration unit 37.

In embodiment of the invention in which sub-banks are subdivided into sub-arrays, the local control unit 39 is configured to generate the selection signal for the multiplexing circuitry 38 that is not only representative of the wave index information but also of the sub-array information included in each request. The control unit 39 may be configured to extract the array information directly from the address data included in each request.

The multiplexing circuitry 38 is configured to receive and route non-colliding requests based on the selection signal that has been generated by the local control unit 39. The requests are routed to the different sub-banks 31-1 and 31-2 in accordance with the wave index information included in each request and, if applicable, also route the requests to the respective sub-arrays 32-1 to 32-4 of the selected sub-banks in accordance with the array information included in each request. Requests to the different sub-banks or the different sub-arrays within each sub-bank may be routed in an alternating fashion (e.g. round robin) using a faster register file clock than the clock of the SIMT core. A portion of the address data of the routed requests is decoded by the row selection circuit 33 at the sub-array level to drive the row of the sub-array that contains the targeted register to be accessed in the register file. Another portion of the address data of the routed requests may be decoded by the column selection circuit 34 at the sub-array level to select the columns of the sub-array that stored to data content of the targeted register to be accessed in the register file.

Register files in accordance with embodiments of the invention are not only hierarchically organized into banks, sub-banks and sub-arrays to optimally exploit and complement the thread level parallelism and wave level parallelism of the SIMT core at high throughput rates but are also unified. A unified register file means that different operand data types such as floating-point numbers and integer numbers, and possibly additional data types like vector, matrix, etc., are stored indistinctively in the general-purpose registers of the unified register file. The correct interpretation of the operand's data type is given by the wave instructions. Moreover, both address data and numeric data can be stored in the registers of the unified register file. Typically, the compiler allocates a predetermined or user-specified number of general-purpose registers to each operand data type required by a kernel to be run on the SIMT processor core. This entails the dynamically reconfigurable, logical partitioning of the unified register file. More specifically, the thread-parallelism required by SIMT model suggests that the logical partitioning is unform across the different threads of the same wave. Hence, the memory space associated with the unified register file is equivalent to the collection of disjoint memory spaces that are associated with the register file banks or bank groups, each aligned with one of the thread lanes of the SIMT core, and the logical partitioning is identical for each register file bank or bank group. Furthermore, to sustain latency hiding when operating the SIMT core with a pool of waves and support multi wave-issuing of the SIMT core without frequent spilling of register contents to local or global memory, the unified register file should be partitioned such that it accommodates a plurality waves.

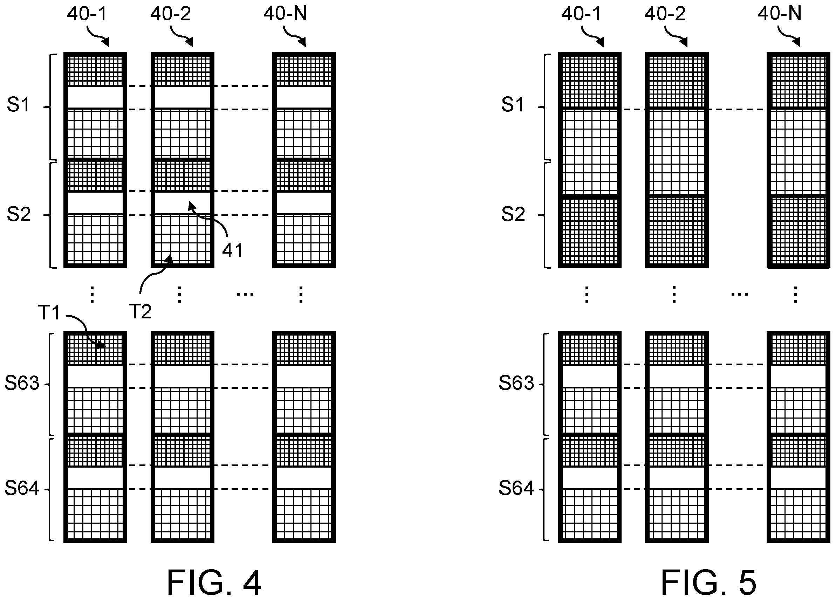

FIG. 4 illustrates the logical partitioning of the individual memory spaces 40-1, ..., 40-N, associated with N different memory banks or bank groups. The collection of disjoint memory spaces 40-1, ..., 40-N composes the total memory space of the unified register file. Typical values may be N = 8, 16, 32, 64, 128. Each of the memory spaces 40-1 to 40-N is divided into K distinct segments associated with K distinct waves. Exemplary values of K are K = 4, 8, 16, 32, 64, 128, 256. In the present example K = 64. The first segment S1 of memory space 40-1 comprises the thread-private registers for a first thread of a first wave (executing on the first lane of the SIMT core), the first segment S1 of memory space 40-2 comprises the thread-private registers for a second thread of the first wave (executing on the second lane of the SIMT core), etc., and the first segment S1 of memory space 40-N comprises the thread-private registers for an Nth thread of the first wave (executing on the Nth lane of the SIMT core). Similarly, the second segment S2 of memory space 40-1 comprises the thread-private registers for a first thread of a second wave (executing on the first lane of the SIMT core), the second segment S2 of memory space 40-2 comprises the thread-private registers for a second thread of the second wave (executing on the second lane of the SIMT core), etc., and the second segment S2 of memory space 40-N comprises the thread-private registers for an Nth thread of the second wave (executing on the Nth lane of the SIMT core). The assignment of the other K-2 segments of the logical partitioned memory spaces to threads of the different waves is performed in the same way. Additionally, every segment of the logical partitioned memory spaces 40-1, ..., 40-N is divided into T sub-segments, representative of the different data types within each wave's own register file space. For instance, each wave's thread may have a first group of registers allocated to operands of a first data type, e.g. integers, and a second group of registers allocated to operands of a second data type, e.g. floating-points. The first group of registers within each segment (e.g., the integer registers) is identified with the first sub-segment T1 and the second group of registers (e.g., the floating-point registers) within each segment is identified with the second sub-segment T2. Not all the registers owned by a wave thread do have to be allocated, e.g. free registers 41 of the register file may exist which have not yet been allocated by the compiler. The register file being unified, a compiler may reconfigure the logical partitions dynamically, e.g. before or during each kernel launch. The number of registers to be allocated to each operand data type may depend on the application and can be specified in the kernel's launch configuration. User code may be optimized for performance by testing different sizes for each sub-segment. Although two sub-segments have been shown in the present example, there may be additional sub-segments present in the logical partitions, e.g. a third sub-segment related to a third data type such as vector, matrix or others. It is noted that the disjoint memory spaces 40-1, ..., 40-N of the N different memory banks or bank groups can be derived from a flat memory model of the complete register file, by applying a hash-based or modulo-based addressing, e.g., IDX_BANK = ADDR_REG mod N. This divides the entire memory space of the register file into the N disjoint memory spaces connected to the individual register file bank or bank group.

FIG. 5 shows another logical partitioning of the individual memory spaces 40-1, ..., 40-N which compose the unified register file. In contrast to the previous partition of FIG. 4, which allocates equal resources of the register file to each wave, the partition of the present example is not uniform across waves. Segment S1, associated with the first out of K = 64 waves, is larger in size compared to the other segments. The additional registers that are allocated to the first wave may be compensated by the reduction in registers that are allocated to another wave, e.g. the second wave in the present example. Indeed, the combined size of the segments S1 and S2 equals the combined size of segments S62 and S63, which are equally large. However, many other logical partitions exist, which are non-uniform across waves. A non-uniform partitioning of the memory spaces may be advantageous in applications in which the different waves execute different (program) code and require different amount of register file resources. For example, workloads that are very data-intensive may benefit from larger register file segments for their waves, while comparatively less register file space may be sufficient for wave segments associated with repeated computations over a small set of input data. If all waves execute the same program code, an equal distribution of register file resources as shown in FIG. 4 may be more advantageous. The logical partitions of FIG. 5 also illustrate the cases in which all the registers of segment S1 have been assigned to sub-segments having different operand data types, not leaving any registers unallocated, and the allocation of all the available registers of segment S2 to the same sub-segment and related data type. However, some restrictions on the minimum number of registers per wave thread may be dictated by the ISA, e.g. the RISC-V ISA defines 31 integer registers and 32 FP registers.

The compiler for the SIMT core may be configured to perform the logical partitioning of the memory spaces into segments and sub-segments. For a given logical partition, the compiler may then simply refer to a register number of a specified wave and operand data type, using a segmented memory model. That is, the compiler identifies a memory location within the unified register file by identifying the wave index, the operand data type and the register number with the corresponding segment, sub-segment and offset within the sub-segment, respectively. The identification of the correct bank or bank group (memory slice) is implicit, because of the static correspondence between requesting thread lanes and individual banks or bank groups of the register file responding to those requests. More specifically, the compiler allocates segments in a first phase and maps the allocated registers in a second phase. During the allocation phase, the compiler defines the size of each sub-segment based on code analysis. More registers can be allocated for a datatype if needed, or less waves can be enabled during allocation, such that more register resources are available to each activate wave. Once the segments are allocated, the compiler parses the code and performs operands-to-register mapping during the second phase. A resource allocation algorithm optimized for reduces register spilling may be used, e.g. a resource allocation algorithm that is aware of the register file microarchitecture in order to optimize throughput.

Hence, associating a wave index with the wave instruction that needs to access the unified register file identifies the corresponding segment of the logical partition, specifying the operand data type in the wave instruction identifies the sub-segment of this segment and specifying a register number in the wave instruction identifies the offset within this sub-segment. For instance, a wave having index A may issue an instruction that requires integer data from integer registers with numbers Rint[0], Rint[11], and writes results back to integer register number Rint[2]; or another wave having index B issues an instruction that requires floating-point data from three floating-point registers with numbers Rfp[0], Rfp[1], Rfp[2].

During execution time, the symbolic register names/numbers for the different waves and operand data types are translated into physical memory addresses, indicating where the register content can be found in the thread-aligned bank or bank group of the unified register file. In embodiments of the invention, the physical register file addresses of operands involved in each wave instruction may be determined while the wave instruction is decoded. A set of physical base addresses, pointing to the start locations of the respective wave sub-segments in the unified register file memory, can be stored in a wave table alongside other wave-related information such as the program counter. This has the advantage of simplifying and accelerating the address translation process during the instruction decoding step, reducing it to a simple addition of base address and offset corresponding to the register number. Moreover, a dynamical reconfiguration of the logical partition of the unified register file, or a reallocation of the register file resources, would only entail an update to the base addresses within the wave table. A wave index assigned to each wave can be used to address entries in the wave table. A start address of each memory bank or bank group of the unified register file may be conveniently set to be zero.

By way of example, fourteen 64-bit integer registers and one hundred 32-bit floating-point registers are allocated to 'wave 1', and thirty-two 64-bit integer registers and sixty-four 32-bit floating-point registers are allocated to 'wave 2' in the unified register file. A byte-addressable register file is assumed. Then, the corresponding physical base address to be used by each thread lane of the SIMT core, when issuing instructions of 'wave 1' that involve integer operands, can be determined at the time of partitioning (e.g., by the compiler) as ADDR_INT_BASE_1 = 0x0 (wave 1 uses segment S1 and sub-segment T1 for integers) and the corresponding physical base address to be used by each thread lane of the SIMT core, when issuing 'wave 1' instructions that involve floating-point operands, can be determined as ADDR_FP_BASE_1 = 112 (i.e., 14*8 bytes). Moreover, the physical base address to be used by each thread lane of the SIMT core, when issuing instructions of 'wave 2' that involve integer operands, can be determined as ADDR_INT_BASE_2 = 512 (i.e., 14*8 bytes + 100*4 bytes, wave 2 uses segment S2 and sub-segment T1 for integers) and the corresponding physical base address to be used by each thread lane of the SIMT core, when issuing 'wave 2' instructions that involve floating-point operands, can be determined as ADDR_FP_BASE_2 = 768 (i.e., ADDR_INT_BASE + 32*8 bytes).

Still referring to the example, the physical address for the first, third and fourth integer register of 'wave 1' can be respectively calculated as ADDR(Rint[0]) = ADDR_INT_BASE_1 + OFFSET[0] = 0+0*8 bytes = 0, ADDR(Rint[2]) = ADDR_INT_BASE_1 + OFFSET[2] = 0+2*8 bytes = 16, and ADDR(Rint[3]) = ADDR_INT_BASE_1 + OFFSET[3] = 0+3*8 bytes = 24. Similarly, the physical address for the first, third and fourth floating-point register of 'wave 2' can be respectively calculated as ADDR(Rfp[0]) = ADDR_FP_BASE_2 + OFFSET[0] = 768+0*4 bytes = 768, ADDR(Rfp[2]) = ADDR_FP_BASE_2 + OFFSET[2] = 768+2*4 bytes = 776, and ADDR(Rfp[3]) = ADDR_FP_BASE_2 + OFFSET[3] = 768+3*4 bytes = 780.

In embodiments of the invention, the decoded wave instructions can be temporarily stored in an instruction buffer of the SIMT processor core. Each entry into the instruction buffer typically includes the following information:

- Wave index information to identify the wave for which the instruction is to be issued,
- Opcode, and optionally function code, to identify the operation encoded in the instruction that is to be executed, in lockstep, by all the active thread lanes,

- Information regarding the instruction format (e.g., R-type, J-type, I-type for RISC-ISA),
- Physical register file addresses of all the read and write operands involved in the instruction, as determined during the decoding step,
- Constant or immediate value included in the instruction, if required for carrying out the operation encoded in the instruction,
- Bit mask identifying the set of active thread lanes, to be used for execution of instruction.

The preceding enumeration is not exhaustive and may include additional or alternatively presented information, depending on the ISA and the chosen SIMT core architecture.

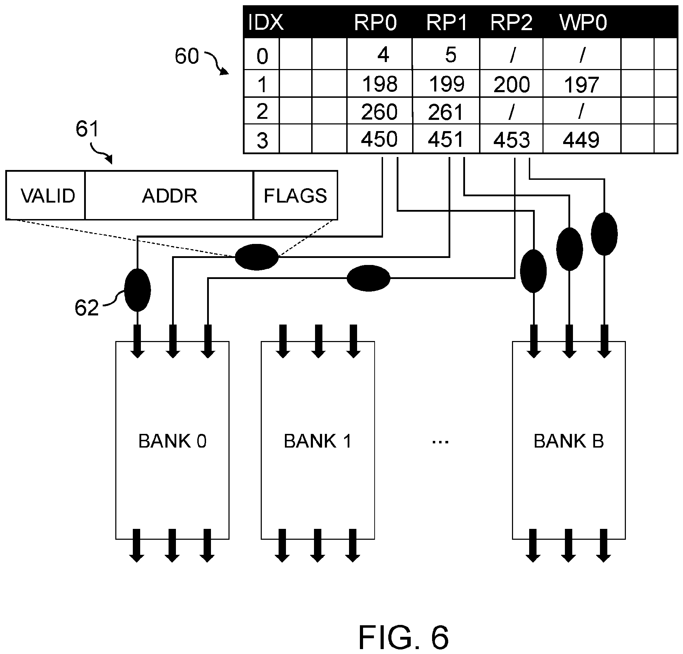

FIG. 6 illustrates the generation and routing of register file access requests based on information stored the instruction buffer. As mentioned before, the instruction buffer 60 stores decoded instructions as entries, wherein the issuing wave is identified by its wave index information IDX. The calculated physical addresses of the set of operands involved in the instruction (e.g., source and destination operands) correspond to the read port fields RP0, RP1, and RP2, and write port field WP0 of each instruction buffer row entry. Owing to the thread-level parallelism of the SIMT core, the same physical address is used to locate the required operand in the register file banks BANK 0 through BANK B associated with the different thread lanes of the SIMT core. The instruction buffer 60 may also store the instruction opcode, immediate values included in wave instructions, the instruction format, the bit mask for determining the set of active lanes in other fields of the buffer row entries (e.g., corresponding to white slots of the instruction buffer).

In the present example, the register file banks allow up to four concurrent bank accesses (e.g., three read ports and one write port). Some operations such as fused multiply-and-add operations require the fetching of three source operands before the operation can be executed on the thread lanes. Providing for three concurrent read accesses to the register file banks thus enables higher arithmetic throughput of those operations. In the present example, instructions of waves with indices one and three may relate to arithmetic fused multiply-and-add operations. In contrast thereto, instructions of waves with indices zero and two may relate to conditional branch-not-equal operations and, in addition to an immediate value, only require two source operands and destination operand.

Individual register file requests are generated for each source operand and each active thread lanes, the destination operands being handled by the writeback/commit unit of the SIMT core. This means that wave threads currently marked as inactive or disabled, e.g. identified by zero bits in the bit mask of the corresponding instruction buffer entry, do not lead to the generation of register file bank access requests for the corresponding thread lanes. For instance, register file bank 'BANK 1' is disabled (inactive) in the wave instruction with index ID = 3 in the present example and does not receive access requests for the source operands. Likewise, wave instructions that use fewer operands, thus leaving some read and/or write ports unused (e.g. marked as "/" in the figure), do not cause the generation of register file access requests for these unutilized ports. For instance, read port RP2 of wave instructions with indices IDX = 0, 2 is unutilized in the present example and does not participate in the creation of register file access requests. To initiate the fetching of the source operands, data packet 62 including the request signals for the respective source operands are routed to the register file banks associated with active SIMT core lanes. As shown, each request signal 61 comprises the following fields: a valid bit (VALID) that is set for active threads, an address field (ADDR) and optional flags (e.g. indicating peek, poke or prefetch options). The address field contains the physical address of the requested operand within the register file bank to which the request is routed.

In embodiments of the invention, the SIMT core frontend may access the register file banks to fetch the operands of the one or multiple waves that will be issued to the lanes of the SIMT core backend during the following instruction issue cycle. However, the available register file bandwidth may not be fully utilized if not all the register file bank ports are accessed. Therefore, operands pertaining to wave instructions that will be issued soon, but not immediately (e.g., next issue cycle), may be prefetched through the unassigned ports (e.g., marked as "/" in FIG. 6). The SIMT core frontend circuitry (e.g. the instruction buffer and dispatch unit) may be configured to support operand prefetching using unassigned register file access ports. The prefetched operands may then be kept in the buffers of the global I/O block of the register file until the wave instructions under consideration are effectively issued. In this case, reading the prefetched operands from the buffers of the global I/O block is much faster than accessing them in the register file banks. The unified register file in accordance with such embodiments supports operand prefetching. This is beneficial for the efficient utilization of the available register file bandwidth, reduces stalls of the SIMT core execution pipeline, and allows for higher wave throughputs.

In embodiments of the invention, the registers of a wave thread can be mapped in various ways to the memory resources of the hierarchically organized, unified register file. This means that neighboring registers of a segment or sub-segment of the logically partitioned memory spaces can be mapped to non-neighboring locations in the register file's physical memory, e.g. mapped onto separate banks of a bank group, separate sub-banks or separate sub-arrays. Preferably, the register mapping preserves word-alignment.

In accordance with the previously described logical partitioning of the individual memory spaces associated with each register file bank or bank group, the most significant bits (MSBs) of the register address may be used to differentiate between the register file spaces that have been allocated to the different waves. These MSBs of the register address can thus be used to route register file requests originating from different wave threads to different sub-banks. In contrast thereto, the least significant bits (LSBs) of the register address can be used to decide on the bank routing within a group of banks, if any, associated with the thread lane, and designate a byte in a word, since word-aligned register file access is preferred in terms of access latency and throughput. The intermediate bits of register address can be used to differentiate between the sub-arrays within a sub-bank and a line in the sub-array. It follows that the register address data can be routed to physical memory resources in the following way:

REG_ADDR = [ADDR_SUBBANK : ADDR_SUBARRAY : ADDR_LINE_OF_ARRAY : (ADDR_BANK_OF_-BANK_GROUP) : ADDR_BYTE_IN_WORD].

In embodiments of the invention, the register address-based routing may use an address length equal to ceil(log2(register file size per thread lane)). A number B = log2(number of banks per bank group) of MSBs are used to route a request to a bank in a bank group. The following SB = log2(number of sub-bank) bits are used to route a request to a sub-bank within a bank. This routing policy ensures parallelism between instructions issued simultaneously.

Routing within a sub-bank generally depends on the microarchitecture of the SIMT core. One option is to use the A = log2(number of sub-arrays per sub bank) following bits to select a sub-array within a sub-bank and use the remaining register address bits to select a row in the sub-array and a byte in a row, i.e., REG_ADDR = [ADDR_BANK_OF_BANK_GROUP : ADDR_SUBBANK : ADDR_SUBARRAY : ADDR_LINE_OF_ARRAY : ADDR_BYTE_IN_ROW]. Another option is to use the R = log2(number of rows per sub-array) following bits to select a row in a sub-array, the A = log2(number of sub-arrays per sub bank) next bits to select a sub-array in a sub-bank, and the remaining register address bits to select a byte, i.e., REG_ADDR = [ADDR_BANK_OF_BANK_GROUP : ADDR_SUBBANK : ADDR_LINE_OF_ARRAY : ADDR_SUBARRAY : ADDR_BYTE_IN_ROW]. This second option may improve throughput.

Finally, the section mapping is done by the compiler and generally depends on the microarchitecture. If multi-issue SIMT core operation is supported by issuing N instructions from the same wave (as in a very long instruction word architecture), then it is preferable to map similar datatypes to a same bank or sub-bank (e.g., INT to bank 0 and FP to bank 1). In this case parallelism is achieved through data type parallelism. Conversely, if multi-issue SIMT core operation is supported by issuing instructions from different waves, then it is preferable to interleave segments across banks or sub-banks. By way of example, the compiler maps all the segments relating to odd waves into bank 0 and all the segments relating to even waves into bank 1.

Furthermore, it may be advantageous to choose a register mapping scheme in which data types are mixed, e.g. favor a mixed allocation of integer and floating-point registers. Given the fact that most wave instructions involve operands of only one data type, e.g. all integer or all floating-point, mixing the allocation of registers for the different data types improves parallelism. For instance, registers that are mapped to the same sub-bank may be mapped in a round-robin manner to the different sub-arrays to improve sub-array parallelism. Indeed, if the compiler allocates consecutive registers of the same sub-segment to the variables of an arithmetic operation, then operands will be fetched from different sub-arrays at the time the corresponding instruction is issued.

In a further example, register mapping may be carried out according to a round-robin policy if a group of register file banks is associated with every thread lane. In the case of having two banks of the register file connected to every thread lane of the SIMT core, consecutive registers of a wave thread are stored alternatingly in one of the two banks B0, B1 of the corresponding bank group, e.g., Reg[0] is mapped to B0, Reg[1] is mapped to B1, Reg[2] is mapped to B0, Reg[3] is mapped to B1, etc. This register mapping, which is applicable to the registers allocated to any wave thread, irrespective of the data type, is possible in unified register files. A portion of the address data, e.g. address field of the request signal, may be used to decide on the register mapping and related request routing to a particular bank of the bank group associated with each lane. For instance, the portion of the address data corresponding to the field (half-open interval) may be used: [log2(w) + log2(B/TL), log2(w)[ , with 'w' being the width (word size) of the individual banks, B being the total number of register file banks and TL being the total number of SIMT core lanes, such that B > TL. Assuming a bank width of w = 8 bytes and B = 2*TL, then the fourth bit of the register's physical address would be used for bank routing. Nonetheless, this is only one possible scenario out of many others. In general, any type of routing and mapping of register file resources can realized to achieve optimal performance with the microarchitecture SIMT core into which the register file is supposed to be integrated.

In another aspect, the present invention relates to a processor core of the SIMT type which comprises a plurality of thread execution lanes on a first die, e.g. a core logic die, and the hierarchically organized, hierarchical register file of the previous aspect on a second die, e.g. a separate memory die, wherein the first die and the second die are vertically integrated.

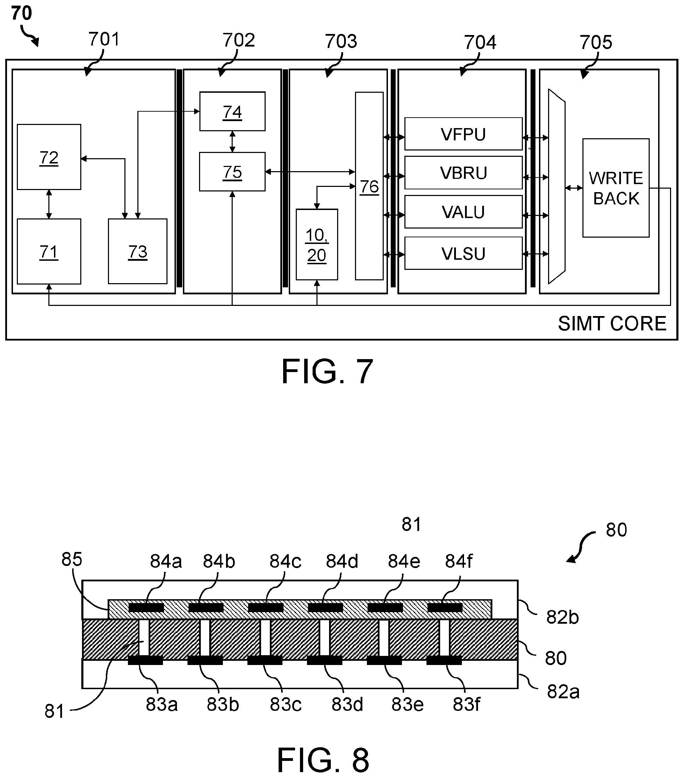

FIG. 7 is a block diagram of a SIMT processor core that comprises a register file in accordance with embodiments of the invention. Frontend circuitry of the SIMT processor core 70 comprises a wave table 71, a wave scheduler 72 and an instruction cache 73, which are assembled into an instruction fetch logic block 701. In logic block 701, the wave table 71 stores metadata regarding a pool of thread groups (e.g., waves) as status information, including information about the waves being ready to execute the next instruction of their associated instruction stream. Moreover, the program counter may be stored in wave table 71 alongside thread-related masking information, such as an active thread mask and a soft-halt mask (indicating which threads have executed a soft-halt instruction marking a reconvergence point in the program control flow). The wave scheduler 72 is configured to select waves from the wave table that are allowed to proceed, e.g. are ready to be executed, and place them into the instruction cache 73. The frontend circuitry of the SIMT core 70 further comprises a decoder unit 74 and an instruction buffer 75, which are arranged into an instruction decode logic block 702. Decoder unit 74 is configured to fetch and decode (e.g., interpret) instructions pointed to by the program counter from the instruction cache 73. Decoded instructions can temporarily be held in the instruction buffer 75. Furthermore, a dispatch unit 76 and a unified register file 10, 20 of the SIMT core 70 frontend circuitry can be logically organized into an instruction dispatch block 703. The unified register file 10, 20 is hierarchically organized into banks, sub-banks and optionally into sub-arrays, in accordance with embodiments of the previous aspect. Dispatch unit 76 is configured to receive decoded instruction that are held in the instruction buffer 75, fetch the instruction operands from the register file 10, 20, and forward the operands alongside the necessary control signals to the execution units within the backend circuitry of the SIMT core 70. The execution units of the core's backend circuitry are arranged in thread execution lanes (not shown separately). There can be scalar execution units as well as vectorial execution units within each lane. As explained hereinbelow, vectorial execution units/functional units have duplicated hardware resources to create several lanes and handle the execution of several threads simultaneously. The execution logic block 704 refers to these various kinds of scalar and vectorial execution units that are present in the different lanes. Eventually, a writeback or commit unit is arranged in a corresponding writeback or commit logic block 705. The different logic blocks 701 to 705 are separated by and synchronized via pipeline registers or clocked latches.

Typically, the thread execution lanes of the execution logic block 704, or "lanes" for short, each comprise a collection of execution units, also called functional units, which are configured to execute active threads in lockstep, i.e., each issued instruction is received by and executed by all the active lanes. Although not shown in FIG. 7, the functional units associated with each lane may comprise one or multiple algorithmic-logic units (ALU), one or multiple load-store units (LSU), one or multiple floating-point units (FPU), a branch unit (BRU), and others. When running in lockstep, the same kind of functional unit in each active lane is executing the same instruction of the instruction stream received by the SIMT core 70, but generally operates on different data elements. Therefore, it is meaningful to consider corresponding functional units of the different lanes as the lane-wise components of a larger vectorized version. For example, the set of ALUs of the different lanes may be considered the lane-wise components of a vectorial algorithmic-logic unit (VALU), the set of LSUs of the different lanes may be considered the lane-wise components of a vectorial load-store units (VLSU), the set of FPUs of the different lanes may be considered the lane-wise components of a vectorial floating-point units (VFPU), the set of BRUs of the different lanes may be considered the lane-wise components of a vectorial branch unit (VBRU), and so forth.

In embodiments of the invention, the frontend circuitry of the SIMT core 70 may be configured to manage the logical partitioning of the register file memory space into segments and sub-segments (e.g. as dynamically configured by the compiler). As mentioned before, the instruction buffer 75 of the SIMT core 70 may be configured to store and perform dynamic updates to the base addresses within the different wave instruction entries, according to the logical partitioning.

FIG. 8 is a cross-sectional view of the SIMT core 70, which is comprised of a logic die 82a and a memory die 82b, vertically stacked and co-integrated with the logic die 82a. Except for the register file 10, 20, which is implemented on the separate memory die 82b, the various components of the frontend and backend circuitry of the SIMT core 70 are implemented on the logic die 82a. An interconnect 80 comprises intermediate wire connections 81 between the logic die 2a and the memory die 2b to enable the transmission and exchange of memory signals (e.g., request signals, response signals) therebetween. Routing circuitry 85 of the interconnect circuit 80 may be implemented on the memory die 2b and allows each thread lane 83a-f of the first die 2a to communicate with any one of the banks 84a-f of the unified register file on the second die 2b. Alternatively, routing circuitry 85 may be implemented on the logic die 2a. It is also possible to implement one part of the routing circuitry 85 on the first die 2a and another part on the second die 2b.

In embodiments of the invention, the number of register file banks or banks groups, B, is at least as large or larger than the number of thread lanes, TL, of the SIMT core, i.e. $B \geq TL$. In operation, wave threads running on the thread lanes of the SIMT core own their thread-private register file space. Instruction pipelining may be implemented with respect to the different logic blocks 701 through 705 shown in FIG. 7. As a result, different instructions can be processed in parallel by the SIMT core 70 by overlapping their pipeline stages. The pipelined SIMT core operation is compatible with commonly used instruction set architectures such as the RISC family.

For instance, up to five different instructions can be processed simultaneously by a SIMT core in a single clock cycle, by overlapping the instruction fetch stage of a fourth wave instruction within the instruction fetch logic block 701, the instruction decode stage of a third wave instruction within the instruction decode logic block 702, the instruction dispatch stage of a second wave instruction within the instruction dispatch logic block 703, the execute stage of a first wave instruction within the execution logic block 704, and the writeback/commit stage of a zeroth wave instruction within the writeback/commit logic block 705 of the SIMT core 70. In embodiments of the invention, the SIMT processor core 70 may dual wave-issue core or multi-wave-issue. This means that during every instruction issue cycle, the SIMT core may dispatch two or more wave instructions, which will execute concurrently on the active thread lanes. Consequently, up to ten different instructions can be processed simultaneously by a dual wave-issue SIMT core in a single clock cycle, by overlapping twice as many wave instructions in the respective pipeline stages. As explained before, the sub-bank organization of the register file supports the dual wave-issue regime of the SIMT core during the dispatch and commit stages of the core's instruction pipeline.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims.

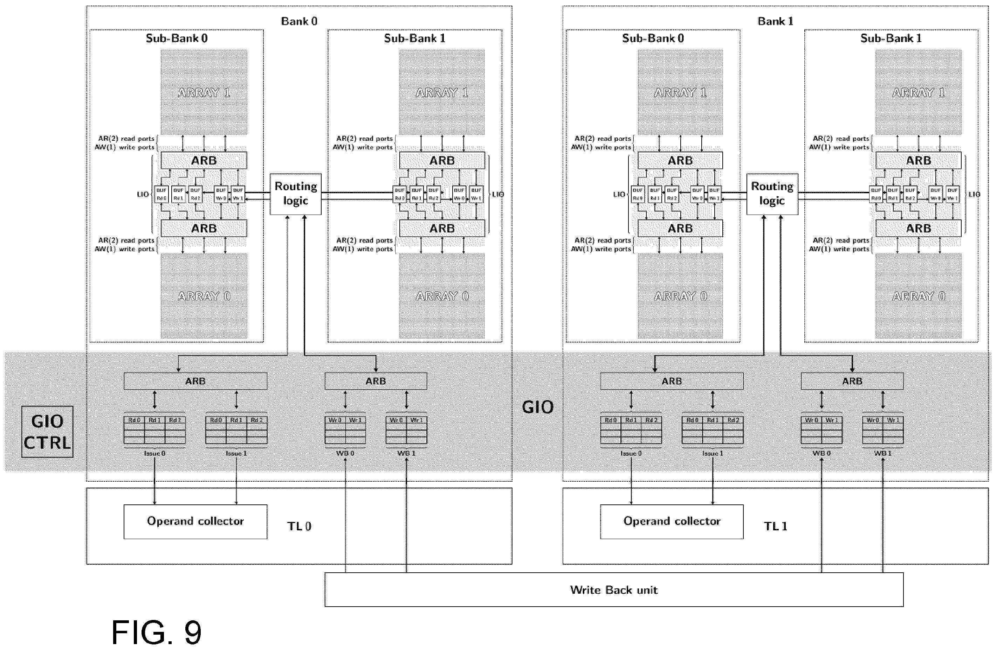

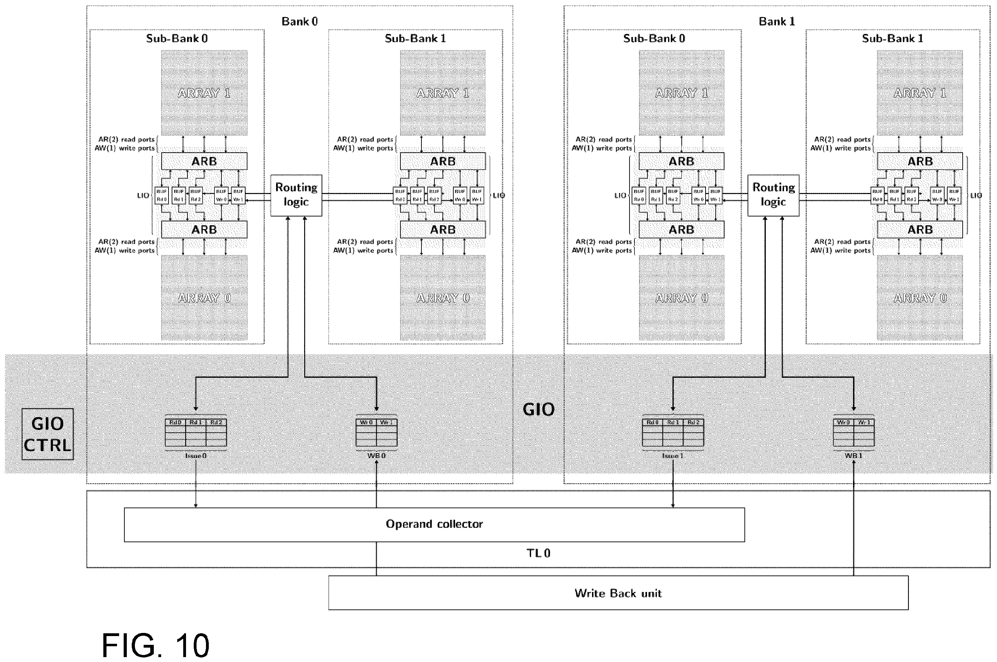

For instance, FIG. 9 and FIG. 10 show variants of the embodiments referred to in FIG. 1 and FIG. 2, respectively, in which the local I/O circuitry is composed of individual local I/O sub-circuits for each sub-bank (corresponding to "LIO" in the figures). The register files of the illustrative embodiments can be pipelined to provide as much operands as needed by the execution units of the SIMT core.

More specifically, FIG. 9 shows a portion of an exemplary register file, which corresponds to two aligned thread lane TL 0 and TL 1. Bank 0 and Bank 1 are respectively associated with thread lane TL 0 and thread lane TL 1. Hence, each thread lane is operatively connected to one private register file bank (one bank per bank group). Each bank comprises two sub-banks (Sub-Bank 0 and Sub-bank 1) as well as two sub-arrays (Array 0 and Array 1) within each sub-bank. This register file, which is compatible with a SIMT core frontend that issues up to two instructions per core clock cycle, has two read interfaces and two write interfaces per thread lane. Up to three distinct operands can be fetched (e.g., operands entered in Rd0, Rd1, Rd2 columns of the global request buffers), and up to two operands can be updated (e.g., operands entered in W0, W1 columns of the global request buffers) per instruction issued. Operands read are collected by an operand collector, whereas operands written are pushed to the register file by a write back unit. Arbitration logic (ARB) and request buffering (BUF for Rd0, Rd1, Rd2 and W0, W1) are provided both at the global I/O level and the local I/O level.

FIG. 10 shows a portion of an exemplary register file, which corresponds to two banks, Bank 0 and Bank 1, which are aligned with the same thread lane TL 0. The main difference with the single banked version per thread lane is that now each register file bank is dedicated to serve a sub-set of waves, e.g., Bank 0 is dedicated to waves having odd indices and Bank 1 to waves having even indices. Hence, the number of global I/O buffer pairs per bank can be reduced to only one pair (assuming two instructions issued per fronted clock cycle). Furthermore, only one sub-bank per register file bank needs to be addressed per frontend clock cycle to reach the desired throughput. Thus, the internal bus can operate at the same clock speed as the frontend. This embodiment supports easily up to four instructions issued per core cycle. The design choice of implementing multiple register file banks private to each thread lane of the SIMT core or only providing a single bank private to each thread lane means trading off cost (integration density) against power.

In the claims, the word "comprising" does not exclude other elements or steps, and the indefinite article "a" or "an" does not exclude a plurality. Any reference signs in the claims should not be construed as limiting the scope.

**Claims**

1.　A hierarchically organized register file for use in a processor core of the SIMT type having a plurality of thread lanes and capable of issuing waves simultaneously during each instruction issue cycle of the processor core, each wave designating a group of threads to be executed concurrently on the plurality of thread lanes, the register file comprising:

　　a global I/O block comprising a plurality of input-output circuits to receive and service wave-related requests to access the register file, each of the plurality of input-output circuits being responsive to a respective one of the thread lanes of the processor core,
　　a plurality of memory banks associated with the plurality of thread lanes, a different memory bank or bank group being allocated to each input-output circuit of the global I/O block, and each memory bank being divided into parallelly accessible sub-banks,
　　per-bank local I/O circuitry, configured to buffer the requests forwarded by the corresponding input-output circuit, schedule the buffered requests and dispatch the scheduled requests to a selected one of the sub-banks,
　　wherein the register file is unified with respect to different threads and with respect to different data types pertaining to each thread, a distinct address space associated with each of the different memory banks or bank groups of the register file being logically partitioned into segments and sub-segments so that different segments of the address space are allocatable to threads of different waves and different sub-segments within each segment are allocatable to the different data types, and the address spaces being partitioned uniformly across the different memory banks or bank groups of the register file,

wherein each request to the register file includes a register address and the local I/O circuitry is configured to select one of the associated sub-banks based on wave index information included in the register address, and wherein the register file is implemented on a separate memory die for vertical integration with a core die comprising the processor core thread lanes.

2. The register file according to claim 1, wherein the local I/O circuitry associated with each bank comprises individual local I/O sub-circuits with respect to each sub-bank of said bank.

3. The register file according to claim 1 or 2, the sub-banks of each memory bank of the register file being sub-divided into multiple, parallelly accessible sub-arrays, wherein the local I/O circuitry is configured to select one of the sub-arrays associated with each sub-bank based on sub-array index information included in the register address.

4. The unified register file according to claim 3, wherein the wave-related requests to the register file pertaining to a multi-operand instruction specify at least two different sub-arrays in the respective register addresses.

5. The unified register file according to any one of the preceding claims, wherein the local I/O circuitry associated with each memory bank is configured to arbitrate between conflicting requests to concurrently access the same sub-bank or, if sub-banks of each memory bank are sub-divided into parallelly accessible sub-arrays, the same sub-array.

6. The unified register file according to claim 5, wherein arbitration between conflicting requests takes into account a number of allocated registers for the waves having conflicting requests.

7. The unified register file according to any one of the preceding claims, wherein the local I/O circuitry associated with each memory bank comprises multiplexing circuitry to select one of the sub-arrays associated with each sub-bank of the memory bank, based on sub-array index information included in the register address.

8. The unified register file according to any one of the preceding claims, wherein the sub-banks of each memory bank are multi-ported memory arrays, for instance including at least three independent read ports and at least two independent write ports.

9. The unified register file according to any one of the preceding claims, further comprising an interconnect configured to route request and response signals between each input-output circuit of the global I/O block and the local I/O circuitry of the corresponding memory bank or bank group and, if the local I/O circuitry comprises individual local I/O sub-circuits for each sub-bank, further route said request signals to and said response signals from the corresponding sub-bank.

10. The unified register file according to any one of the preceding claims, each input-output circuit of the global I/O block comprising buffers configured to gather read operands pertaining to the same wave-related request from the different memory banks or bank groups, and hold write operands pertaining to the same wave-related request to be stored in the different memory banks or bank groups.

11. The register file according to any one of the preceding claims, wherein each local I/O circuitry comprises synchronization circuitry configured for accessing register entries of the associated sub-banks with uniform latency, and/or configured to synchronize different clock domains associated with the operations of the global I/O block and the local I/O circuitry respectively.

12. The register file according to any one of the preceding claims, wherein the memory banks are implemented as SRAM banks.

13. A processor core of the SIMT type having a plurality of thread lanes and capable of issuing multiple waves during each instruction issue cycle of the processor core, the processor core comprising the register file according to any one of the preceding claims, and the memory die containing the register file is being vertically integrated with the core die comprising the processor core thread lanes.

14. The processor core of claim 13, further comprising a wave table, an instruction decoder and an instruction buffer,

wherein the wave table is configured to hold a set of wave entries, each wave entry comprising a wave index, a program counter pointing to an instruction to be executed in lockstep by the plurality of thread lanes, a bit mask specifying a group of active threads within the wave and a base address for each data type related to the wave, wherein the instruction decoder is configured to decoded instructions pointed to by the program counters of wave table entries selected for execution, including determining the register address of each operand involved in said instruction based on the base address for the operand's data type and a register number identifying the operand in the instruction,

wherein the instruction buffer is configured to hold the decoded ones of the instructions pointed to by the program counters of wave table entries selected for execution, the decoded instructions specifying the register address of each operand intervening in said instruction.

15. The processor core according to claim 14, further comprising a control unit configured to dynamically set the base addresses in the wave table in response to a dynamical repartition of the address spaces associated with the memory banks or bank groups of the register file, such as produced by a compiler.

FIG. 1

FIG. 2

FIG. 3

FIG. 5

FIG. 4

| IDX | | | RP0 | RP1 | RP2 | WP0 | | |
|-----|---|---|-----|-----|-----|-----|---|---|
| 0 | | | 4 | 5 | / | / | | |
| 1 | | | 198 | 199 | 200 | 197 | | |
| 2 | | | 260 | 261 | / | / | | |
| 3 | | | 450 | 451 | 453 | 449 | | |

60

61

| VALID | ADDR | FLAGS |
|-------|------|-------|

62

BANK 0        BANK 1        ...        BANK B

FIG. 6

**70**

701  702  703  704  705

VFPU

VBRU

VALU

VLSU

WRITE
BACK

SIMT CORE

## FIG. 7

81  80

85  84a  84b  84c  84d  84e  84f

82b

80

82a

81  83a  83b  83c  83d  83e  83f

## FIG. 8

FIG. 9

FIG. 10

**EUROPEAN SEARCH REPORT**

Application Number

EP 24 22 2333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/261538 A1 (MANSELL DAVID HENNAH [GB] ET AL) 17 September 2015 (2015-09-17) * paragraphs [0054], [0056], [0058], [0092], [0093] * | 1-15 | INV.<br>G06F9/30<br>G06F9/38 |
| A | US 2017/371654 A1 (BAJIC LJUBISA [CA] ET AL) 28 December 2017 (2017-12-28) * the whole document * | 1-15 | |
| A | US 7 650 602 B2 (UNIV KYUSHU [JP]) 19 January 2010 (2010-01-19) * the whole document * | 1-15 | |

TECHNICAL FIELDS
SEARCHED (IPC)

G06F

The present search report has been drawn up for all claims

| Place of search | Date of completion of the search | Examiner |
|---|---|---|
| The Hague | 6 June 2025 | Gratia, Romain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2333

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | | | Publication date | Patent family member(s) | | Publication date |
|---|---|---|---|---|---|---|
| US 2015261538 | A1 | | 17-09-2015 | GB | 2524063 A | 16-09-2015 |
| | | | | US | 2015261538 A1 | 17-09-2015 |
| US 2017371654 | A1 | | 28-12-2017 | CN | 109478136 A | 15-03-2019 |
| | | | | EP | 3475809 A1 | 01-05-2019 |
| | | | | JP | 2019519843 A | 11-07-2019 |
| | | | | KR | 20190011317 A | 01-02-2019 |
| | | | | US | 2017371654 A1 | 28-12-2017 |
| | | | | WO | 2017222893 A1 | 28-12-2017 |
| US 7650602 | B2 | | 19-01-2010 | JP | 2005284749 A | 13-10-2005 |
| | | | | US | 2005240930 A1 | 27-10-2005 |

EPO FORM P0459

For more details about this annex : see Official Journal of the European Patent Office, No. 12/82

**REFERENCES CITED IN THE DESCRIPTION**

**Patent documents cited in the description**

- US 10853904 B2, Eckert